# EUROPEAN PATENT SPECIFICATION

(11) **EP 3 640 491 B1**
(45) Date of publication and mention of the grant of the patent: **04.08.2021**
(21) Application number: 18200739.3
(22) Date of filing: 16.10.2018
(51) Int. Cl.: F16D 55/227

(54) **BRAKE CALIPER DEVICE**
BREMSSATTELVORRICHTUNG
DISPOSITIF D'ÉTRIER DE FREIN

(43) Date of publication of application: 22.04.2020
(73) Proprietor: Liao, Chih-Hsien, Taichung City 40755 (TW)
(72) Inventor: Liao, Chih-Hsien, Taichung City 40755 (TW)
(74) Representative: Würmser, Julian

(56) References cited:
- EP-A1- 1 464 863
- EP-A1- 3 266 664
- GB-A- 2 018 372
- US-A- 5 622 241

## Description

The disclosure relates to a brake caliper device, and more particularly to a brake caliper device for a vehicle.

US patent application 5 622 241 A aims to disclose a trailer brake system providing a disc brake assembly with a caliper unit including a housing for mounting the pads for relative movement toward and away from the rotor and a cradle with spaced guide pins/tracks for securely supporting the housing at multiple, spaced points. The cradle includes a yoke having spaced arms and a cross piece for embracing the housing, and is independently mounted on a single pivot pin. First and second stops are provided on the bracket for engagement with the cross piece to limit the pivot movement of the caliper unit during vehicle backing and forward movement, respectively. Guide apertures are provided adjacent the distal end of the respective arms of the yoke and include an elastomeric bushing around the guide pins for cushioned in and out movement. The spaced guide tracks on the housing assist in providing axial stability. An elastomeric spring formed integrally with the bushing bodily centers the housing in the axial direction during the non-braking modes and provides added cushion effect. An elastomeric bumper at the first stop urges the caliper unit towards the second stop to prevent pressure release during vehicle forward movement, including in the braking mode. A relief valve feeds/exhausts a common transfer line to the cylinder in the housing of the caliper unit.

Taiwanese Patent Publication Number 163856 discloses a conventional brake caliper device adapted to be mounted to a vehicle body and adapted to be used with a brake disk. The conventional brake caliper device includes a positioning frame that is adapted to be fixed to the vehicle body and that has opposite side parts for flanking the brake disk, a brake caliper that has opposite portions for flanking the positioning frame and the brake disk, and first and second brake pads that are respectively disposed at opposite sides of the brake disk. The positioning frame includes two guiding members . The brake caliper includes a first seat that is slidable relative to the positioning frame along an axis parallel to a central axis of the brake disc, and a second seat that is connected to the first seat. The first seat is formed with two receiving holes that respectively receive the guiding members, and a pressure member for pushing the first brake pad to abut against the brake disk.

The second seat is proximate to the second brake pad. When the pressure member pushes the first brake pad to abut against the brake disk, the brake caliper is driven by a counterforce to move oppositely such that the second brake pad is simultaneously driven to abut against the brake disk.

However, since the guiding members of the positioning frame extend through an upper portion of the first seat, the positioning frame is easily driven by its own weight and the weights of the first and second brake pads to become inclined, such that the braking process become less smooth or even nonfunctional, which can be proven fatal.

Therefore, an object of the disclosure is to provide a brake caliper device that can alleviate the drawback of the prior art.

According to the disclosure, the brake caliper device is adapted to be mounted to a vehicle body and adapted to be used with a brake disk. The brake disk has a first side surface and a second side surface opposite to the first side surface, both of which are perpendicular to a central axis of the brake disk. The brake caliper device has a positioning unit, a main body unit, a lining unit, and an actuating unit.

The positioning unit includes a positioning member that is adapted to be fixed to the vehicle body, two upper guiding members that are connected to the positioning member and that extend along an axial direction parallel to the central axis, and a lower guiding member that is connected to the positioning member, that extends along the axial direction, and that is lower than the upper guiding members.

The main body unit includes a first seat and a second seat. The first seat is connected to the upper guiding members and the lower guiding member, faces and is adapted to be adjacent to the first side surface of the brake disk, and is adapted to be movable along the axial direction relative to the first side surface of the brake disk. The second seat that is co-movably connected to the first seat, faces and is adapted to be adjacent to the second side surface of the brake disk faces and is adjacent to the second seat, and cooperates with the first seat to define a receiving space therebetween for receiving a part of the brake disk.

The lining unit includes a first lining member that is adapted to be disposed between the first seat and the first side surface of the brake disk, that is disposed in the receiving space, and that is movable along the axial direction, and a second lining member that is adapted to be movably disposed between the second seat and the second side surface of the brake disk, that is disposed in the receiving space, and that is movable along the axial direction.

The actuating unit is mounted to the first seat, is operable to push the first lining member to abut against the first side surface of the brake disk, so as to generate a counterforce to push the first seat away from the brake disk and to move the second seat to press the second lining member against the second side surface of the brake disk, thereby clamping the brake disk between the first and second lining members.

The first seat of said main body unit has a first inner surface that is adjacent to said receiving space, a first outer surface that is opposite to said first inner surface, two upper through holes that extend through said first inner and outer surfaces and that respectively receive said upper guiding members, and a lower through hole that is located between said upper through holes and that receives said lower guiding member; and
said lower guiding member is lower than said upper guiding members.

Other features and advantages of the disclosure will become apparent in the following detailed description of the embodiment with reference to the accompanying drawings, of which:
FIG. 1 is a perspective view of an embodiment of a brake caliper device according to the disclosure paired with a brake disk;
FIG. 2 is an exploded perspective view of the embodiment and the brake disk;
FIG. 3 is a top view of the embodiment;
FIG. 4 is a sectional view taken along line IV-IV in FIG. 3;
FIG. 5 is a sectional view taken along line V-V in FIG. 3;
FIG. 6 is a sectional view taken along line VI-VI in FIG. 4;
FIG. 7 is a sectional view taken along line VII-VII in FIG. 4;
FIG. 8 is a side view of the embodiment and the brake disk; and
FIG. 9 is a sectional view taken along line IX-IX in FIG. 8.

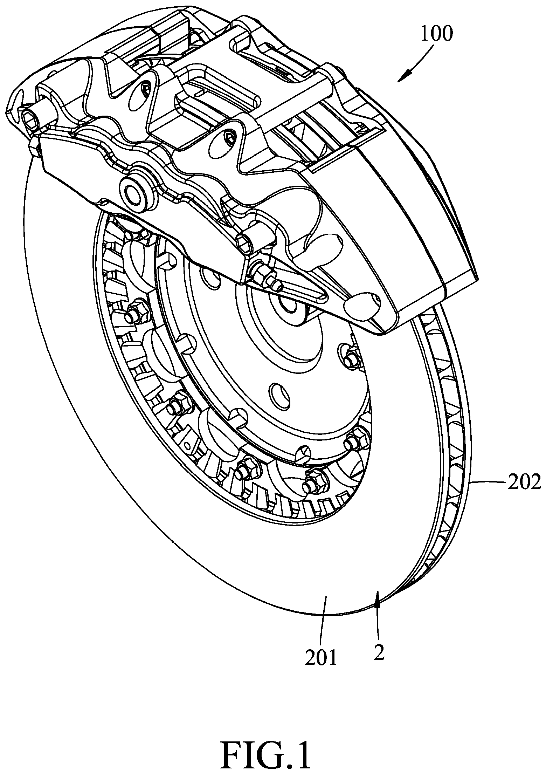

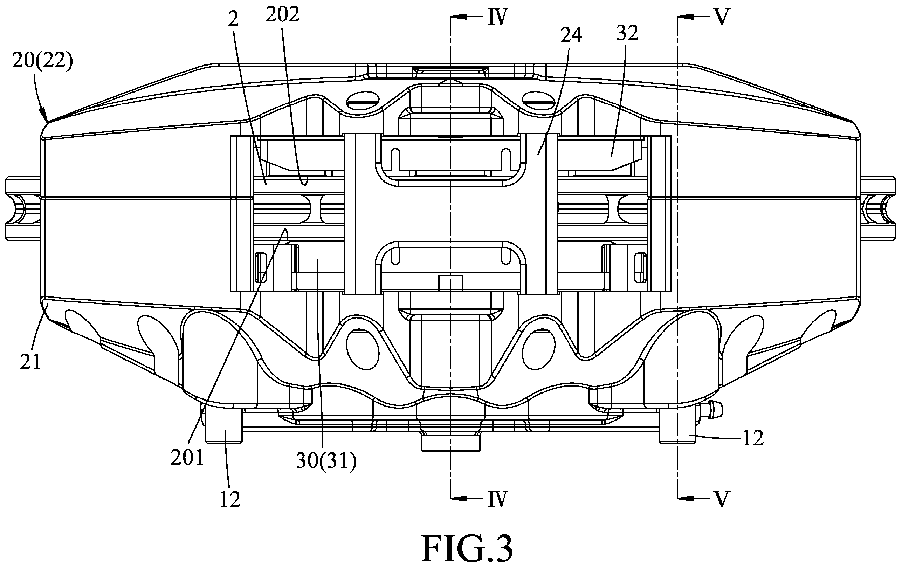

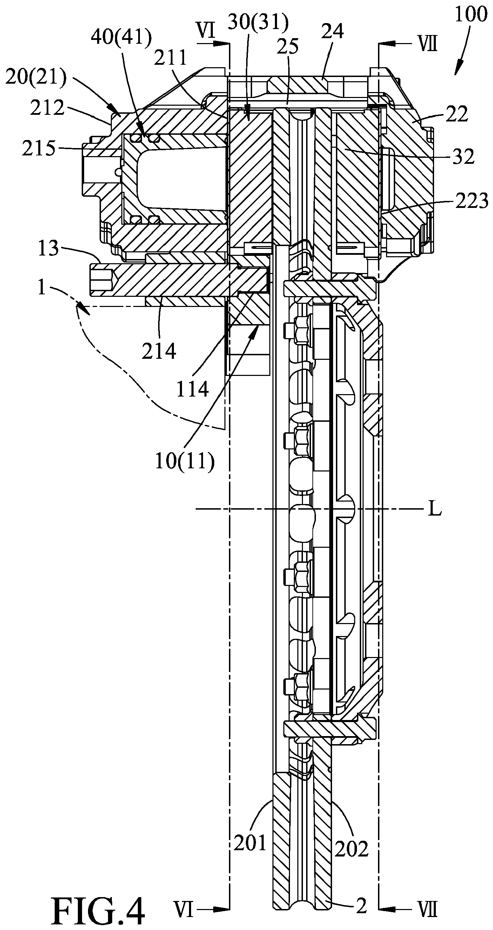

Referring to FIGS. 1 to 4, an embodiment of a brake caliper device 100 according to the disclosure is adapted to be mounted to a vehicle body 1 (see FIG. 4) and adapted to be used with a brake disk 2. The brake disk 2 has a first side surface 201 and a second side surface 202 opposite to the first side surface 201. The first and second side surfaces 201, 202 are perpendicular to a central axis (L) of the brake disk 2. The brake caliper device 100 includes a positioning unit 10, a main body unit 20, a lining unit 30, and an actuating unit 40.

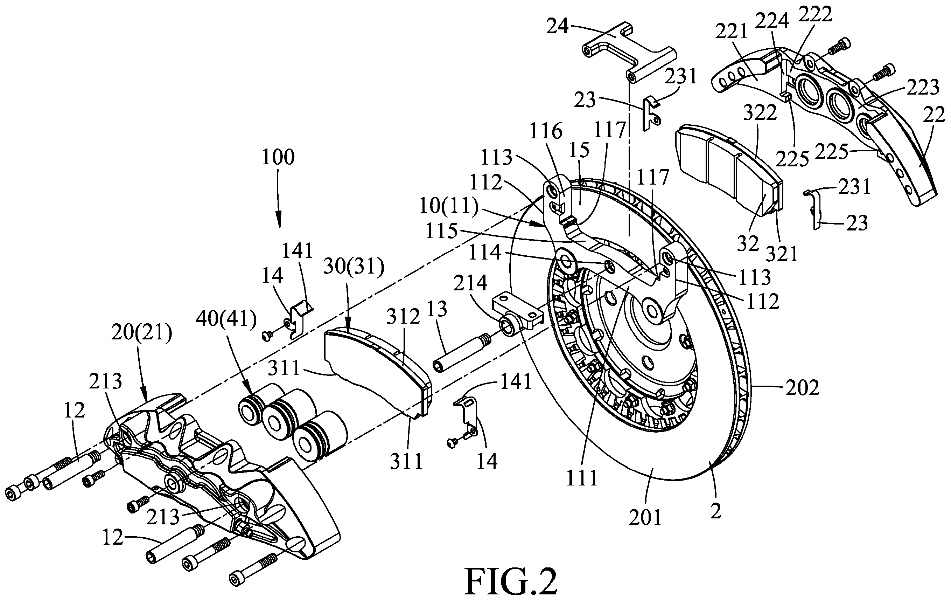

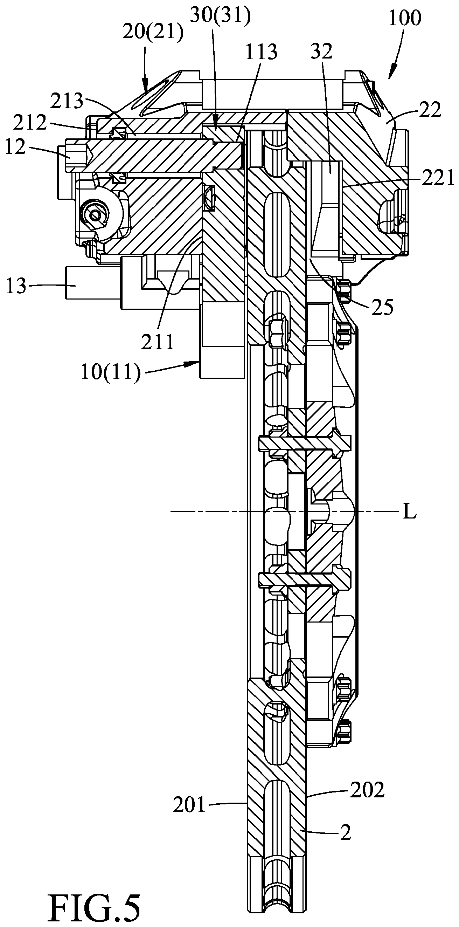

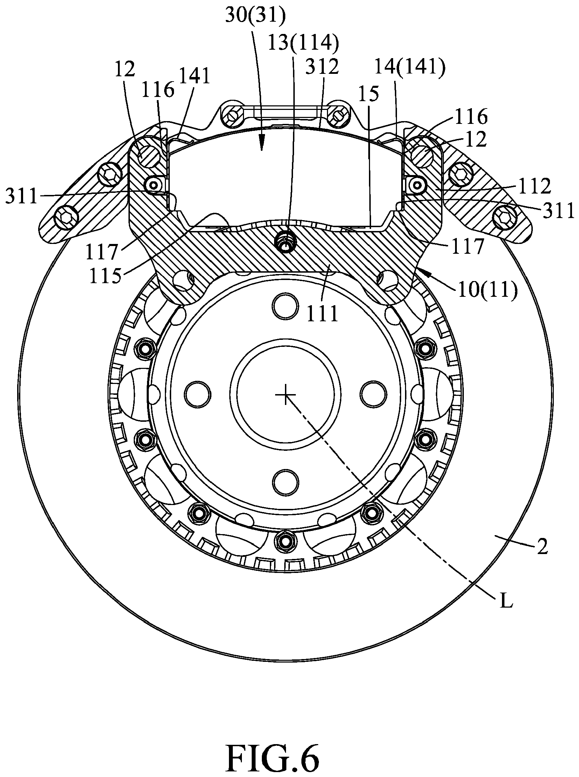

Referring further to FIGS. 5 and 6, the positioning unit 10 includes a positioning member 11 that is adapted to be fixed to the vehicle body 1, two upper guiding members 12 that are connected to the positioning member 11 and that are parallel to the central axis (L), a lower guiding member 13 that is connected to the positioning member 11, that is parallel to the central axis (L), and that is lower than the upper guiding members 12, and two first resilient sheets 14 that are connected to the positioning member 11. The positioning member 11 has a U-shaped cross-section perpendicular to the central axis (L) . Specifically, the positioning member 11 has a base portion 111, and two side portions 112 that respectively and upwardly extend from opposite ends of the base portion 111. The base portion 111 has a top surface 115, and each of the side portions 112 has an inner surface 116 and a stepped shoulder surface 117 that is disposed between the top surface 115 of the base portion 111 and the side surface 116. The top surface 115, the side surfaces 116 and the shoulder surfaces 117 cooperatively define a first receiving groove 15. A top end of each of the side portions 112 distal from the base portion 111 is formed with an upper lock hole 113, and the base portion 111 is formed with a lower lock hole 114 that is disposed between the side portions 112. Each of the upper guiding members 12 is rod-shaped and engages fixedly the upper lock hole 113 of a respective one of the side portions 112. Likewise, the lower guiding member 13 is rod-shaped and engages fixedly the lower lock hole 114 of the base portion 111. It should be noted that, the lower guiding member 13 is located between the upper guiding members 12, and a distance between the lower guiding member 13 and the central axis (L) is smaller than a distance between each of the upper guiding members 12 and the central axis (L). In this embodiment, each of the first resilient sheets 14 is fixedly mounted to a respective one of the side portions 112 via a screw (as shown in FIG. 2) , and has an inverted V-shaped resilient portion 141.

Referring to FIGS. 2 and 5 to 7, the main body unit 20 includes a first seat 21, a second seat 22, two second resilient sheets 23 that are connected to the second seat 22, and a connecting member 24. The first seat 21 faces and is adapted to be adjacent to the first side surface 201 of the brake disk 2. The second seat 22 faces and is adapted to be adjacent to the second side surface 202 of the brake disk 2. The first and second seats 21, 22 cooperatively define a receiving space 25 therebetween for receiving an upper part of the brake disk 2. The positioning member 11 of the positioning unit 10 is also received in the receiving space 25, and is adapted to be disposed between the first seat 21 and the first side surface 21 of the brake disk 2.

Referring to FIGS. 5 to 9, the first seat 21 is connected to the upper guiding members 12 and the lower guiding member 13, and is movable parallel to the central axis (L) relative to the first side surface 201 of the brake disk 2. The first seat 21 has a first inner surface 211 that is adjacent to the receiving space 25, a first outer surface 212 that is opposite to the first inner surface 211, two upper through holes 213 that extend through the first inner and outer surfaces 211, 212 and that respectively receive the upper guiding members 12, a lower through hole 214 that is located between the upper through holes 213 and that receives the lower guiding member 13, and a plurality of piston chambers 215 (three in this embodiment) that are formed in the first inner surface 211.

Referring to FIGS. 2, 5, 7 and 9, the second seat 22 has a base wall surface 223, two side wall surfaces 224 that respectively extend from opposite sides of the base wall surface 223 toward the receiving space 25, and two second inner surfaces 221 that respectively extend from the two side wall surfaces 224 away from each other and that are substantially parallel to the base wall surface 223. The base wall surface 223 and the second inner surfaces 221 are respectively distal from and proximate to the receiving space 25. The second seat 22 further has two support surfaces 225, each of which is perpendicularly connected to the side wall surface 223 and a respective one of the side wall surfaces 224. The base wall surfaces 223, the side wall surfaces 224 and the support surfaces 225 cooperatively define a second receiving groove 222 that is adjacent to the receiving space 25.

In this embodiment, each of the second resilient sheets 23 is fixedly mounted to a respective one of the side wall surfaces 224 via a screw (not shown) , and has an inverted V-shaped resilient portion 231.

The connecting member 24 interconnects the first and second seats 21, 22, such that the second seat 22 is co-movable with the first seat 21.

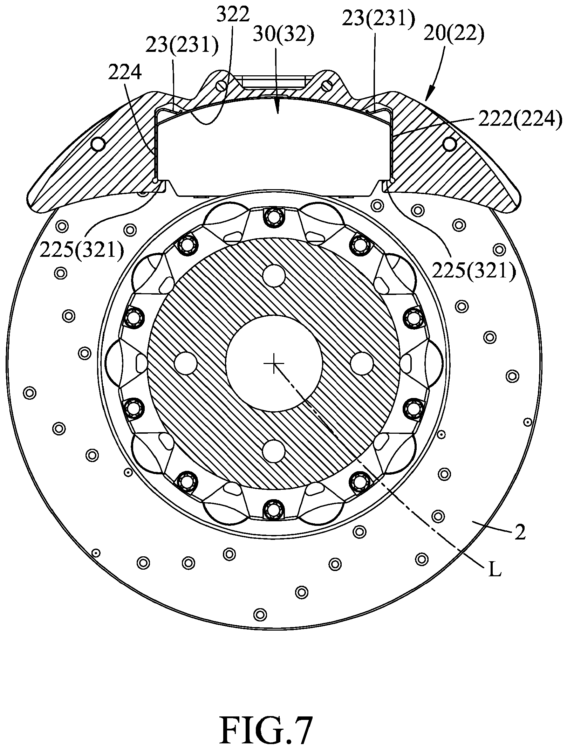

Referring back to FIGS. 6 and 7, the lining unit 30 includes a first lining member 31 that is adapted to be disposed between the first seat 21 and the first side surface 201 of the brake disk 2, that is disposed in the receiving space 25 and that is movable parallel to the central axis (L) , and a second lining member 32 that is adapted to be movably disposed between the second seat 22 and the second side surface 202 of the brake disk 2, that is disposed in the receiving space 25 and that is movable parallel to the central axis (L) . Specifically, the first lining member 31 is movably disposed in the first receiving groove 15 of the positioning unit 10, has two first abutting surfaces 311 that movably and respectively abut against the shoulder surfaces 117 of the side portions 112 of the positioning member 11, and a first top surface 312 that is opposite to the first abutting surfaces 311. The resilient portions 141 of the first resilient sheets 14 resiliently press against the first top surface 312 toward the base portion 111 of the positioning member 11. The second lining member 32 is received in the second receiving groove 222 of the second seat 22 of the main body unit 20, has two second abutting surfaces 321 that movably and respectively abut against the support surfaces 225 of the second seat 22 of the main body unit 20, and a second top surface 322 that is opposite to the second abutting surfaces 321. The resilient portion 231 of each of the second resilient sheets 23 resiliently presses against the second top surface 322, such that the second lining member 32 comes into contact with the support surfaces 225 of the second seat 22 of the main body unit 20.

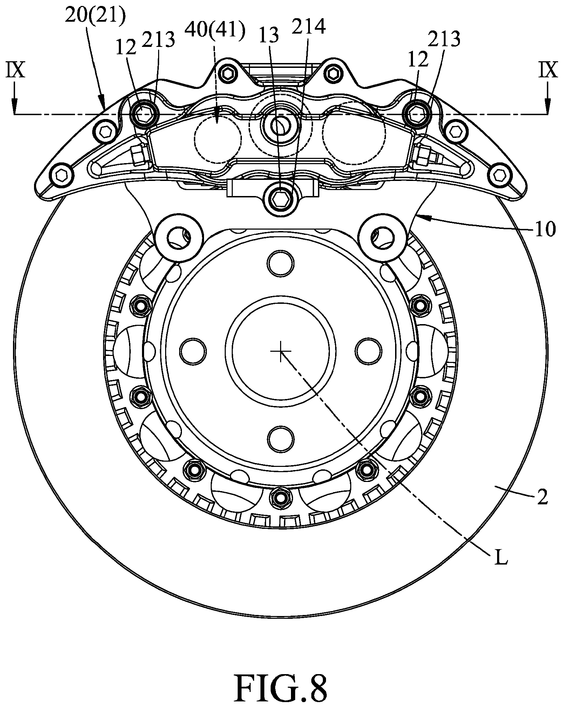

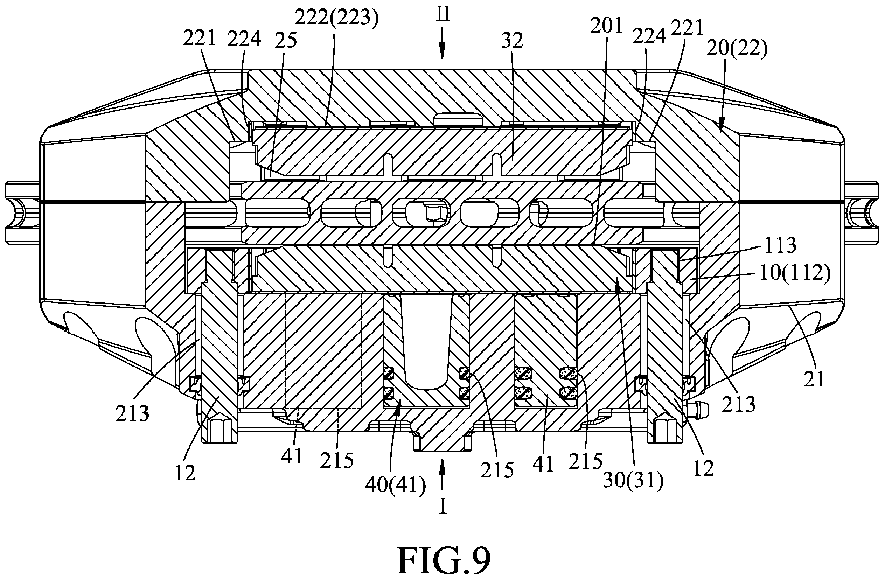

Referring back to FIGS. 8 and 9, the actuating unit 40 is mounted to the first seat 21 of the main body unit 20, and includes a plurality of hydraulic pistons 41 that are respectively received in the piston chambers 215 of the first seat 21, and each of which has an end that abuts against the first lining member 31.

The following paragraphs will disclose the operation of the brake caliper device 100 in greater details:
Referring back to FIGS. 4 and 5, after the assembly of the brake caliper device 100 in conjunction with the brake disk 2, during a regular operation in which braking is not initiated, gaps are presented between the first lining member 31 and the first side surface 201 and between the second lining member 32 and the second side surface 202, thereby allowing the brake disk 2 to rotate freely.

Referring back to FIGS. 4 and 9, when a braking process is initiated, pressurized oil is injected into the piston chambers 215, such that the hydraulic pistons 41 are hydraulically operated to push the first lining member 31 in a first direction (I) and toward the first side surface 201 of the brake disk 2. Given that the positioning unit 11 is fixed relative to the central axis (L), when the pressurized oil is continuously injected into the piston chambers 215, a counterforce begins to generate, pushing the first seat 21 of the main body unit 20 away from the brake disk 2 in a second direction (II) opposite to the first direction (I), and simultaneously moving the second seat 22 of the main body unit 20 in the second direction (II) to press the second lining member 32 against the second side surface 202 of the brake disk 2 (since the second seat 22 is co-movably connected to the first seat 31), thereby clamping the brake disk 2 between the first and second lining members 31, 32.

During the counterforce movement of the main body unit 20, the first seat 21 may stably move along the upper guiding members 12 and the lower guiding member 13 without becoming inclined, thereby ensuring that the movement of the main body unit 20 relative to the positioning unit 10 remain be stable for the braking process.

Overall, the implementation of the lower guiding member 13, in conjunction with the upper guiding members 12, ensures that the positioning unit 10 is dimensionally stable and no longer prone to inclination, thereby ensuring smooth movement of the main body unit 20 during the braking process.

In the description above, for the purposes of explanation, numerous specific details have been set forth in order to provide a thorough understanding of the embodiment. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects, and that one or more features or specific details from one embodiment may be practiced together with one or more features or specific details from another embodiment, where appropriate, in the practice of the disclosure.

## Claims

1. A brake caliper device (100) adapted to be mounted to a vehicle body (1) and adapted to be used with a brake disk (2), the brake disk (2) having a first side surface (201) and a second side surface (202) opposite to the first side surface (201), the first and second side surfaces (201, 202) being perpendicular to a central axis (L) of the brake disk (2), said brake caliper device (100) including:
a positioning unit (10) including a positioning member (11) that is adapted to be fixed to the vehicle body (1), two upper guiding members (12) that are connected to said positioning member (11) and that are parallel to the central axis (L), and a lower guiding member (13) that is connected to said positioning member (11) and that is parallel to the central axis (L));
a main body unit (20) including
a first seat (21) that is connected to said upper guiding members (12) and said lower guiding member (13), that faces and is adapted to be adjacent to the first side surface (201) of the brake disk (2), and that is adapted to be movable parallel to the central axis (L) relative to the first side surface (201) of the brake disk (2), and
a second seat (22) that is co-movably connected to said first seat (21), that faces and is adapted to be adjacent to the second side surface (202) of the brake disk (2), and that cooperates with said first seat (21) to define a receiving space (25) therebetween for receiving a part of the brake disk (2);
a lining unit (30) including a first lining member (31) that is adapted to be disposed between said first seat (21) and the first side surface (201) of the brake disk (2), that is disposed in said receiving space (25) and that is movable parallel to the central axis (L), and a second lining member (32) that is adapted to be movably disposed between said second seat (22) and the second side surface (202) of the brake disk (2), that is disposed in said receiving space (25) and that is movable parallel to the central axis (L); and
an actuating unit (40) mounted to said first seat (21), said actuating unit (40) being operable to push said first lining member (31) to abut against the first side surface (201) of the brake disk (2), so as to generate a counterforce to push said first seat (21) away from the brake disk (2) and to move said second seat (22) to press said second lining member (32) against the second side surface (202) of the brake disk (2), thereby clamping the brake disk (2) between the first and second lining members (31, 32);
**characterized in that**:
said first seat (21) of said main body unit (20) has a first inner surface (211) that is adjacent to said receiving space (25), a first outer surface (212) that is opposite to said first inner surface (211), two upper through holes (213) that extend through said first inner and outer surfaces (211, 212) and that respectively receive said upper guiding members (12), and a lower through hole (214) that is located between said upper through holes (213) and that receives said lower guiding member (13); and
said lower guiding member (13) is lower than said upper guiding members (12).

2. The brake caliper device (100) as claimed in claim 1, further **characterized in that**:
said positioning member (11) of said positioning unit (10) is received in said receiving space (25) and is adapted to be disposed between said first seat (21) and the first side surface (201) of the brake disk (2); and
said positioning member (11) has a U-shaped cross-section perpendicular to the central axis (L), and has a base portion (111) and two side portions (112) that respectively and upwardly extend from opposite ends of said base portion (111) and that cooperate with said base portion (111) to define a first receiving groove (15) that receives said first lining member (31).

3. The brake caliper device (100) as claimed in claim 2, further **characterized in that**:
each of said upper guiding members (12) is rod-shaped and is connected to a top end of a respective one of said side portions (112) of said positioning member (11); and
said lower guiding member (13) is rod-shaped, is connected to said base portion (111), and is located below and between said upper guiding members (12);
a distance between said lower guiding member (13) and the central axis (L) is smaller than a distance between each of said upper guiding members (12) and the central axis (L).

4. The brake caliper device (100) as claimed in claim 2, further **characterized in that**:
said base portion (111) of said positioning member (11) has a top surface (115);
each of said side portions (112) of said positioning member (11) has an inner side surface (116) and a shoulder surface (117) that is disposed between said top surface (115) of said base portion (111) and said side surface (116);
said top surface (115) of said base portion (111), and said side surfaces (116) and said shoulder surfaces (117) of said side portions (112) cooperatively define said first receiving groove (15); and
said first lining member (31) has two first abutting surfaces (311) that movably and respectively abut against said shoulder surfaces (117) of said side portions (112) of said positioning member (11).

5. The brake caliper device (100) as claimed in claim 4, further **characterized in that**:
said first lining member (31) further has a first top surface (312) that is opposite to said first abutting surfaces (311); and
said positioning unit (10) further includes two first resilient sheets (14) that are connected to said positioning member (11), and that resiliently press against said first top surface (312) of said first lining member (31) toward said base portion (111) of said positioning member (11).

6. The brake caliper device (100) as claimed in claim 1, further **characterized in that**:
said first seat (21) of said main body unit (20) has a first inner surface (211) that is adjacent to said receiving space (25), and a plurality of piston chambers (215) that are formed in said first inner surface (211); and
said actuating unit (40) includes a plurality of hydraulic pistons (41) that are respectively received in said piston chambers (215), and that are hydraulically operable to push said first lining member (31) toward the first side surface (201) of the brake disk (2).

7. The brake caliper device (100) as claimed in claim 1, further **characterized in that**:
said second seat (22) of said main body unit (20) has
a base wall surface (223),
two side wall surfaces (224) that respectively extend from opposite sides of said base wall surface (223) toward said receiving space (25),
two second inner surfaces (221) that respectively extend from said two side wall surfaces (224) away from each other and that are substantially parallel to said base wall surface (223), said base wall surface (223) and said second inner surfaces (221) being respectively distal from and proximate to said receiving space (25), and
two support surfaces (225), each of which is perpendicularly connected to said base wall surface (223) and a respective one of said side wall surfaces (224);
said base wall surface (223), said side wall surfaces (224) and said support surfaces (225) cooperatively define a second receiving groove (222) that is adjacent to said receiving space (25) and that receives said second lining member (32); and
said second lining member (32) has two second abutting surfaces (321) that movably and respectively abut against said support surfaces (225) of said second seat (22) of said main body unit (20).

8. The brake caliper device (100) as claimed in claim 7, further **characterized in that**:
said second lining member (32) further has a second top surface (322) that is opposite to said second abutting surfaces (321); and
said main body unit (20) further includes two second resilient sheets (23) that are connected to said second seat (22), and that resiliently press against said second top surface (322) of said second lining member (32) such that said second lining member (32) comes into contact with said support surfaces (225) of said second seat (22).

## Patentansprüche

1. Bremssattelvorrichtung (100), die dazu angepasst ist, an einer Fahrzeugkarosserie (1) angebracht zu sein, und dazu angepasst ist, mit einer Bremsscheibe (2) verwendet zu werden, wobei die Bremsscheibe (2) eine erste Seitenfläche (201) und eine der ersten Seitenfläche (201) entgegengesetzte zweite Seitenfläche (202) hat, wobei die erste und zweite Seitenfläche (201, 202) senkrecht zu einer Mittelachse (L) der Bremsscheibe (2) sind, wobei die Bremssattelvorrichtung (100) aufweist:
eine Positionierungseinheit (10), die ein Positionierungselement (11), das dazu angepasst ist, an der Fahrzeugkarosserie (1) befestigt zu sein, zwei obere Führungselemente (12), die an das Positionierungselement (11) angeschlossen und parallel zur Mittelachse (L) sind, und ein unteres Führungselement (13) aufweist, das an das Positionierungselement (11) angeschlossen und parallel zur Mittelachse (L) ist;
eine Hauptkörpereinheit (20), die aufweist
einen ersten Sitz (21), der an die oberen Führungselemente (12) und das untere Führungselement (13) angeschlossen ist, welcher der ersten Seitenfläche (201) der Bremsscheibe (2) zugewandt und dazu angepasst ist, angrenzend an diese Seitenfläche zu sein, und der dazu angepasst ist, parallel zur Mittelachse (L) in Bezug auf die erste Seitenfläche (201) der Bremsscheibe (2) beweglich zu sein, und
einen zweiten Sitz (22), der mitbeweglich an den ersten Sitz (21) angeschlossen ist, welcher der zweiten Seitenfläche (202) der Bremsscheibe (2) zugewandt und dazu angepasst ist, angrenzend an diese Seitenfläche zu sein, und der mit dem ersten Sitz (21) zusammenwirkt, um einen Aufnahmeraum (25) zwischen diesen zu bilden, um einen Teil der Bremsscheibe (2) aufzunehmen;
eine Belageinheit (30), die ein erstes Belagelement (31), das dazu angepasst ist, zwischen dem ersten Sitz (21) und der ersten Seitenfläche (201) der Bremsscheibe (2) angeordnet zu sein, das in dem Aufnahmeraum (25) angeordnet und parallel zur Mittelachse (L) beweglich ist, und ein zweites Belagelement (32) aufweist, das dazu angepasst ist, beweglich zwischen dem zweiten Sitz (22) und der zweiten Seitenfläche (202) der Bremsscheibe (2) angeordnet zu sein, das in dem Aufnahmeraum (25) angeordnet und parallel zur Mittelachse (L) beweglich ist; und
eine Betätigungseinheit (40), die am ersten Sitz (21) angebracht ist, wobei die Betätigungseinheit (40) funktionsfähig ist, um das erste Belagelement (31) in Anlage an die erste Seitenfläche (201) der Bremsscheibe (2) zu schieben, um eine Gegenkraft zu erzeugen, um den ersten Sitz (21) von der Bremsscheibe (2) weg zu drücken und den zweiten Sitz (22) zu bewegen, um das zweite Belagelement (32) gegen die zweite Seitenfläche (202) der Bremsscheibe (2) zu drücken, wodurch die Bremsscheibe (2) zwischen dem ersten und zweiten Belagelement (31, 32) eingeklemmt wird;
**dadurch gekennzeichnet, dass**:
der erste Sitz (21) der Hauptkörpereinheit (20) eine erste Innenfläche (211), die an den Aufnahmeraum (25) angrenzt, eine erste Außenfläche (212), die der ersten Innenfläche (211) entgegengesetzt ist, zwei obere Durchgangsöffnungen (213), die sich durch die erste Innen- und Außenfläche (211, 212) erstrecken und jeweils die oberen Führungselemente (12) aufnehmen, und eine untere Durchgangsöffnung (214) hat, die sich zwischen den oberen Durchgangsöffnungen (213) befindet und das untere Führungselement (13) aufnimmt; und
das untere Führungselement (13) niedriger ist als die oberen Führungselemente (12).

2. Bremssattelvorrichtung (100) nach Anspruch 1, darüber hinaus **dadurch gekennzeichnet, dass**:
das Positionierungselement (11) der Positionierungseinheit (10) in dem Aufnahmeraum (25) aufgenommen und dazu angepasst ist, zwischen dem ersten Sitz (21) und der ersten Seitenfläche (201) der Bremsscheibe (2) angeordnet zu sein; und
das Positionierungselement (11) einen U-förmigen Querschnitt senkrecht zur Mittelachse (L) hat, und einen Basisabschnitt (111) und zwei Seitenabschnitte (112) hat, die sich jeweils und nach oben von entgegengesetzten Enden des Basisabschnitts (111) erstrecken und mit dem Basisabschnitt (111) zusammenwirken, um eine erste Aufnahmenut (15) zu bilden, die das erste Belagelement (31) aufnimmt.

3. Bremssattelvorrichtung (100) nach Anspruch 2, darüber hinaus **dadurch gekennzeichnet, dass**:
jedes der oberen Führungselemente (12) stabförmig und an ein oberes Ende eines jeweiligen der Seitenabschnitte (112) des Positionierungselements (11) angeschlossen ist; und
das untere Führungselement (13) stabförmig ist, an den Basisabschnitt (111) angeschlossen ist, und sich unter und zwischen den oberen Führungselementen (12) befindet;
ein Abstand zwischen dem unteren Führungselement (13) und der Mittelachse (L) kleiner ist als ein Abstand zwischen jedem der oberen Führungselemente (12) und der Mittelachse (L).

4. Bremssattelvorrichtung (100) nach Anspruch 2, darüber hinaus **dadurch gekennzeichnet, dass**:
der Basisabschnitt (111) des Positionierungselements (11) eine Oberseite (115) hat;
jeder der Seitenabschnitte (112) des Positionierungselements (11) eine innere Seitenfläche (116) und eine Schulterfläche (117) hat, die zwischen der Oberseite (115) des Basisabschnitts (111) und der Seitenfläche (116) angeordnet ist;
die Oberseite (115) des Basisabschnitts (111) und die Seitenflächen (116) und die Schulterflächen (117) der Seitenabschnitte (112) zusammenwirkend die erste Aufnahmenut (15) bilden; und
das erste Belagelement (31) zwei erste Anlageflächen (311) hat, die beweglich und jeweils an den Schulterflächen (117) der Seitenabschnitte (112) des Positionierungselements (11) anliegen.

5. Bremssattelvorrichtung (100) nach Anspruch 4, darüber hinaus **dadurch gekennzeichnet, dass**:
das erste Belagelement (31) darüber hinaus eine erste Oberseite (312) hat, die den ersten Anlageflächen (311) entgegengesetzt ist; und
die Positionierungseinheit (10) darüber hinaus zwei erste federelastische Schichten (14) aufweist, die an das Positionierungselement (11) angeschlossen sind und federelastisch gegen die erste Oberseite (312) des ersten Belagelements (31) zum Basisabschnitt (111) des Positionierungselements (11) hin drücken.

6. Bremssattelvorrichtung (100) nach Anspruch 1, darüber hinaus **dadurch gekennzeichnet, dass**:
der erste Sitz (21) der Hauptkörpereinheit (20) eine erste Innenfläche (211), die an den Aufnahmeraum (25) angrenzt, und mehrere Kolbenkammern (215) hat, die in der ersten Innenfläche (211) ausgebildet sind; und
die Betätigungseinheit (40) mehrere hydraulische Kolben (41) aufweist, die jeweils in den Kolbenkammern (215) aufgenommen sind und hydraulisch funktionsfähig sind, um das erste Belagelement (31) zur ersten Seitenfläche (201) der Bremsscheibe (2) hin zu schieben.

7. Bremssattelvorrichtung (100) nach Anspruch 1, darüber hinaus **dadurch gekennzeichnet, dass**:
der zweite Sitz (22) der Hauptkörpereinheit (20) hat
eine Grundwandfläche (223),
zwei Seitenwandflächen (224), die sich jeweils von entgegengesetzten Seiten der Grundwandfläche (223) zum Aufnahmeraum (25) hin erstrecken,
zwei zweite Innenflächen (221), die sich jeweils von den zwei Seitenwandflächen (224) voneinander weg erstrecken und im Wesentlichen parallel zur Grundwandfläche (223) sind, wobei die Grundwandfläche (223) und die zweiten Innenflächen (221) fern von bzw. nahe an dem Aufnahmeraum (25) sind, und
zwei Stützflächen (225), wovon jede senkrecht an die Grundwandfläche (223) und eine jeweilige der Seitenwandflächen (224) angeschlossen ist;
die Grundwandfläche (223), die Seitenwandflächen (224) und die Stützflächen (225) zusammenwirkend eine zweite Aufnahmenut (222) bilden, die an den Aufnahmeraum (25) angrenzt und das zweite Belagelement (32) aufnimmt; und
das zweite Belagelement (32) zwei zweite Anlageflächen (321) hat, die beweglich jeweils an den Stützflächen (225) des zweiten Sitzes (22) der Hauptkörpereinheit (20) anliegen.

8. Bremssattelvorrichtung (100) nach Anspruch 7, darüber hinaus **dadurch gekennzeichnet, dass**:
das zweite Belagelement (32) darüber hinaus eine zweite Oberseite (322) hat, die den zweiten Anlageflächen (321) entgegengesetzt ist; und
die Hauptkörpereinheit (20) darüber hinaus zwei zweite federelastische Schichten (23) aufweist, die an den zweiten Sitz (22) angeschlossen sind und federelastisch so an die zweite Oberseite (322) des zweiten Belagelements (32) drücken, dass das zweite Belagelement (32) mit den Stützflächen (225) des zweiten Sitzes (22) in Kontakt kommt.

## Revendications

1. Dispositif d'étrier de frein (100) apte à être monté sur un corps de véhicule (1) et apte à être utilisé avec un disque de frein (2), le disque de frein (2) présentant une première surface latérale (201) et une deuxième surface latérale (202) opposée à la première surface latérale (201), la première et la deuxième surface latérale (201, 202) étant perpendiculaires à un axe central (L) du disque de frein (2), ledit dispositif d'étrier de frein (100) incluant :
une unité de positionnement (10) incluant un élément de positionnement (11) qui est apte à être fixé au corps de véhicule (1), deux éléments de guidage supérieurs (12) qui sont connectés audit élément de positionnement (11) et qui sont parallèles à l'axe central (L), et un élément de guidage inférieur (13) qui est connecté audit élément de positionnement (11) et qui est parallèle à l'axe central (L) ;
une unité de corps principal (20) incluant :
un premier siège (21) qui est connecté auxdits éléments de guidage supérieurs (12) et audit élément de guidage inférieur (13), qui fait face et est apte à être adjacent à la première surface latérale (201) du disque de frein (2), et qui est apte à être mobile de manière parallèle à l'axe central (L) par rapport à la première surface latérale (201) du disque de frein (2), et
un deuxième siège (22) qui est connecté de manière co-mobile audit premier siège (21), qui fait face et est apte à être adjacent à la deuxième surface latérale (202) du disque de frein (2), et qui interagit avec ledit premier siège (21) pour définir un espace de réception (25) entre eux pour recevoir une partie du disque de frein (2) ;
une unité de garnissage (30) incluant un premier élément de garnissage (31) qui est apte à être disposé entre ledit premier siège (21) et la première surface latérale (201) du disque de frein (2), qui est disposé dans ledit espace de réception (25) et qui est mobile de manière parallèle à l'axe central (L), et un deuxième élément de garnissage (32) qui est apte à être disposé de manière mobile entre ledit deuxième siège (22) et la deuxième surface latérale (202) du disque de frein (2), qui est disposé dans ledit espace de réception (25) et qui est mobile de manière parallèle à l'axe central (L) ; et
une unité d'actionnement (40) montée sur ledit premier siège (21), ladite unité d'actionnement (40) étant manœuvrable pour pousser ledit premier élément de garnissage (31) pour venir en butée contre la première surface latérale (201) du disque de frein (2), de manière à générer une force contraire pour pousser ledit premier siège (21) en éloignement du disque de frein (2) et pour déplacer ledit deuxième siège (22) pour appuyer ledit deuxième élément de garnissage (32) contre la deuxième surface latérale (202) du disque de frein (2), serrant ainsi le disque de frein (2) entre le premier et le deuxième élément de garnissage (31, 32) ;
**caractérisé en ce que** :
ledit premier siège (21) de ladite unité de corps principal (20) présente une première surface intérieure (211) qui est adjacente audit espace de réception (25), une première surface extérieure (212) qui est opposée à ladite première surface intérieure (211), deux trous traversants supérieurs (213) qui s'étendent à travers lesdites premières surfaces intérieure et extérieure (211, 212) et qui reçoivent respectivement lesdits éléments de guidage supérieurs (12), et un trou traversant inférieur (214) qui est situé entre lesdits trous traversants supérieurs (213) et qui reçoit ledit élément de guidage inférieur (13) ; et
ledit élément de guidage inférieur (13) est plus bas que lesdits éléments de guidage supérieurs (12).

2. Le dispositif d'étrier de frein (100) tel que revendiqué dans la revendication 1, **caractérisé en outre en ce que** :
ledit élément de positionnement (11) de ladite unité de positionnement (10) est reçue dans ledit espace de réception (25) et est apte à être disposé entre ledit premier siège (21) et la première surface latérale (201) du disque de frein (2) ; et
ledit élément de positionnement (11) présente une section transversale en forme de U perpendiculaire à l'axe central (L), et présente une partie de base (111) et deux parties latérales (112) qui s'étendent respectivement et vers le haut depuis des extrémités opposées de ladite partie de base (111) et qui interagissent avec ladite partie de base (111) pour définir une première rainure de réception (15) qui reçoit ledit premier élément de garnissage (31).

3. Le dispositif d'étrier de frein (100) tel que revendiqué dans la revendication 2, **caractérisé en outre en ce que** :
chacun desdits éléments de guidage supérieurs (12) est en forme de tige et est connecté à une extrémité supérieure d'une respective desdites parties latérales (112) dudit élément de positionnement (11) ; et
ledit élément de guidage inférieur (13) est en forme de tige, est connecté à ladite partie de base (111), et est situé sous et entre lesdits éléments de guidage supérieurs (12) ;
une distance entre ledit élément de guidage inférieur (13) et l'axe central (L) est plus petite qu'une distance entre chacun desdits éléments de guidage supérieurs (12) et l'axe central (L).

4. Le dispositif d'étrier de frein (100) tel que revendiqué dans la revendication 2, **caractérisé en outre en ce que** :
ladite partie de base (111) dudit élément de positionnement (11) présente une surface supérieure (115) ;
chacune desdites parties latérales (112) dudit élément de positionnement (11) présente une surface latérale intérieure (116) et une surface d'épaulement (117) qui est disposée entre ladite surface supérieure (115) de ladite partie de base (111) et ladite surface latérale (116) ;
ladite surface supérieure (115) de ladite partie de base (111), et lesdites surfaces latérales (116) et lesdites surfaces d'épaulement (117) desdites parties latérales (112) définissent par interaction ladite première rainure de réception (15) ; et
ledit premier élément de garnissage (31) présente deux premières surfaces de butée (311) qui viennent en butée de manière mobile et respectivement contre lesdites surfaces d'épaulement (117) desdites parties latérales (112) dudit élément de positionnement (11).

5. Le dispositif d'étrier de frein (100) tel que revendiqué dans la revendication 4, **caractérisé en outre en ce que** :
ledit premier élément de garnissage (31) présente en outre une première surface supérieure (312) qui est opposée auxdites premières surfaces de butée (311) ; et
ladite unité de positionnement (10) inclut en outre deux premières feuilles souples (14) qui sont connectées audit élément de positionnement (11), et qui appuient de manière souple contre ladite première surface supérieure (312) dudit premier élément de garnissage (31) vers ladite partie de base (111) dudit élément de positionnement (11).

6. Le dispositif d'étrier de frein (100) tel que revendiqué dans la revendication 1, **caractérisé en outre en ce que** :
ledit premier siège (21) de ladite unité de corps principal (20) présente une première surface intérieure (211) qui est adjacente audit espace de réception (25), et une pluralité de chambres à piston (215) qui sont formées dans ladite première surface intérieure (211) ; et
ladite unité d'actionnement (40) inclut une pluralité de pistons hydrauliques (41) qui sont reçus respectivement dans lesdites chambres à piston (215), et qui sont manœuvrables hydrauliquement pour pousser ledit premier élément de garnissage (31) vers la première surface latérale (201) du disque de frein (2).

7. Le dispositif d'étrier de frein (100) tel que revendiqué dans la revendication 1, **caractérisé en outre en ce que** :
ledit deuxième siège (22) de ladite unité de corps principal (20) présente une surface de paroi de base (223),
deux surfaces de paroi latérales (224) qui s'étendent respectivement depuis des côtés opposés de ladite surface de paroi de base (223) vers ledit espace de réception (25),
deux deuxièmes surfaces intérieures (221) qui s'étendent respectivement depuis lesdites deux surfaces de paroi latérales (224) en éloignement l'une de l'autre et qui sont sensiblement parallèles à ladite surface de paroi de base (223), ladite surface de paroi de base (223) et lesdites deuxièmes surfaces intérieures (221) étant respectivement distales par rapport à et proches dudit espace de réception (25), et
deux surfaces de support (225), dont chacune est connectée perpendiculairement à ladite surface de paroi de base (223) et à une respective desdites surfaces de paroi latérales (224) ;
ladite surface de paroi de base (223), lesdites surfaces de paroi latérales (224) et lesdites surfaces de support (225) définissent par interaction une deuxième rainure de réception (222) qui est adjacente audit espace de réception (25) et qui reçoit ledit deuxième élément de garnissage (32) ; et
ledit deuxième élément de garnissage (32) présente deux deuxièmes surfaces de butée (321) qui viennent en butée de manière mobile et respective contre lesdites surfaces de support (225) dudit deuxième siège (22) de ladite unité de corps principal (20).

8. Le dispositif d'étrier de frein (100) tel que revendiqué dans la revendication 7, **caractérisé en outre en ce que** :
ledit deuxième élément de garnissage (32) présente en outre une deuxième surface supérieure (322) qui est opposée auxdites deuxièmes surfaces de butée (321) ; et
ladite unité de corps principal (20) inclut en outre deux deuxièmes feuilles souples (23) qui sont connectées audit deuxième siège (22), et qui appuient de manière souple contre ladite deuxième surface supérieure (322) dudit deuxième élément de garnissage (32) de telle sorte que ledit deuxième élément de garnissage (32) entre en contact avec lesdites surfaces de support (225) dudit deuxième siège (22).
